# EUROPEAN PATENT SPECIFICATION

(11) **EP 2 796 789 B1**
(45) Date of publication and mention of the grant of the patent: **01.03.2017**
(21) Application number: 13165488.1
(22) Date of filing: 26.04.2013
(51) Int. Cl.: F23R 3/14, F23R 3/28, F23R 3/34, F23R 3/46

(54) **Can combustor for a can-annular combustor arrangement in a gas turbine**
Rohrbrennkammer für eine Rohr-Ring Anordnung in einer Gasturbine
Chambre de combustion à tubes pour un agencement de chambre de combustion annulaire dans une turbine à gaz

(43) Date of publication of application: 29.10.2014
(73) Proprietor: General Electric Technology GmbH, 5400 Baden (CH)
(72) Inventor: Knapp, Klaus, 5412 Gebenstorf (CH); Aluri, Naresh, 5300 Ennetturgi (CH); Tran, Nicolas, 8002 Zurich (CH); Rathmann, Ulrich, 5400 Baden (CH); Genin, Franklin Marie, 5415 Nussbaumen (CH)
(74) Representative: Bernotti, Andrea

(56) References cited:
- EP-A2- 1 517 088
- EP-A2- 2 213 942
- EP-A2- 2 538 139
- WO-A1-03/058123
- DE-A1- 19 615 910
- DE-A1-102007 042 059
- DE-A1-102010 060 363
- US-A1- 2003 152 880
- US-A1- 2010 058 766
- US-A1- 2010 297 566

## Description

### Technical Field

The invention relates to a can combustor for a can-annular combustor arrangement in a gas turbine, preferably a heavy-duty gas turbine for a power plant, with low NOₓ- and CO-emissions.

### Background of the Invention

Modern heavy-duty gas turbines are equipped with multi-burner silo-combustors, with annular combustors or with can-annular combustor arrangements.

A can-annular combustor consists of a number of individual can-combustors, annularly arranged in the combustion chamber of the gas turbine. The design of a conventional can-combustor is characterized by having a cylindrical combustor with - at its upstream end - one center burner and more than five burners arranged in an annular pattern equally spaced at a constant radial distance to the central axis of the circular combustor. The center burner can be of different design and can have a different axial exit plane position in relation to the other burners. The center burner often works as a pilot stage featuring part of the fuel being injected in a diffusion flame mode or as a partially premixed pilot.

A combustor is disclosed, for example, in the published patent applications DE 102010060363 or in DE 102011000589. EP 2 796 789 A1 discloses a can combustor according to the preamble of claim 1.

WO 2012136787 discloses a can-annular combustion system in connection with a heavy-duty gas turbine using the reheat combustion principle.

### Summary of the Invention

It is an object of the present invention to provide a can-combustor for a can-annular combustor arrangement in a gas turbine with an improved operability, serviceability and environmental performance.

One of numerous aspects of the present invention includes a can combustor for a can-annular combustor arrangement in a gas turbine, according to the features of claim 1.

Another essential aspect of the invention relates to the arrangement of the premixed burners within the can. In particular, this arrangement has to be done in such a way that the probability to excite thermoacoustic instabilities is reduced. Various measures in this regard are part of the present invention. The approach is to avoid symmetry planes and to reduce the size of coherent flow structures. According to the invention this is realized by placing the burners on the front panel on different radial distances from its central axis (different perimeters), by inclining the burner axis in radial and/or azimuthal direction and/or by using a conical front panel design. These embodiments are referred in more detail in the dependent claims.

The advantages of the gas turbine combustion system according to the present invention are, amongst others, the following:
The gas turbine combustion system has reduced emissions and an improved flame stability at multiload conditions. This is accomplished by complete premixing of the fuel and combustion air in burners with a conical swirl generator and, downstream thereof, an adapted mixing tube.

The burner/burner communication and hence stabilization within the can-combustor can be enhanced by the disclosed measures of burner arrangement and influencing the formation, place and intensity of shear layers by co- and counter-swirl arrangements.

The resulting secondary flow scheme in the vicinity of the burner exit and the residual swirl along the combustor can be used to get optimum operational behaviour and temperature pattern at the turbine inlet.

Arrangements with different burner configurations with the can combustor lead to a wider operating range.

The gas turbine combustion system according to the invention eliminates the arrangement of the common center burner, often acting as a pilot burner. This fact and the limited number of installed premixed burners provides cost saving potential.

The present invention is applicable in can-annular combustor arrangements in reheat or non-reheat gas turbines with low emissions of NOₓ and CO.

The compact size allows a design with a limited number of wearing parts and effects a low sensitivity to combustion dynamics.

The can-combustor architecture reduces circumferential temperature gradients at the turbine inlet. This effects the lifetime of turbine parts.

### Brief Description of the Drawings

These and other features, aspects and advantages of the present invention are described in more detail with reference to the accompanying drawings, wherein
- Fig. 1a, 1b: show a schematic view of a first embodiment of a can-combustor in a top view (Fig. 1a) and in a sectional side view (Fig. 1b), which does not form part of the invention;
- Fig. 2a, 2b: show a top view on a front panel with four burners, attached to the front panel on different perimeters (Fig. 2a) according to the invention or on different azimuthal angles (Fig. 2b);
- Fig. 3a, 3b: show a schematic view of a can-combustor with burners of different lengths of the mixing tube in top view (Fig. 3a) and side view (Fig.3b);
- Fig. 4a, 4b: show a schematic view of a can-combustor with burners of different dimensions;
- Fig. 5a-5d: show a top view onto a front panel with four installed burners which do not form part of the invention with different senses of swirl rotation;
- Fig. 6a-6c: show side views of a can-combustor with a planar or a conical front panel.

### Description of at least one Way of Carrying out the Invention

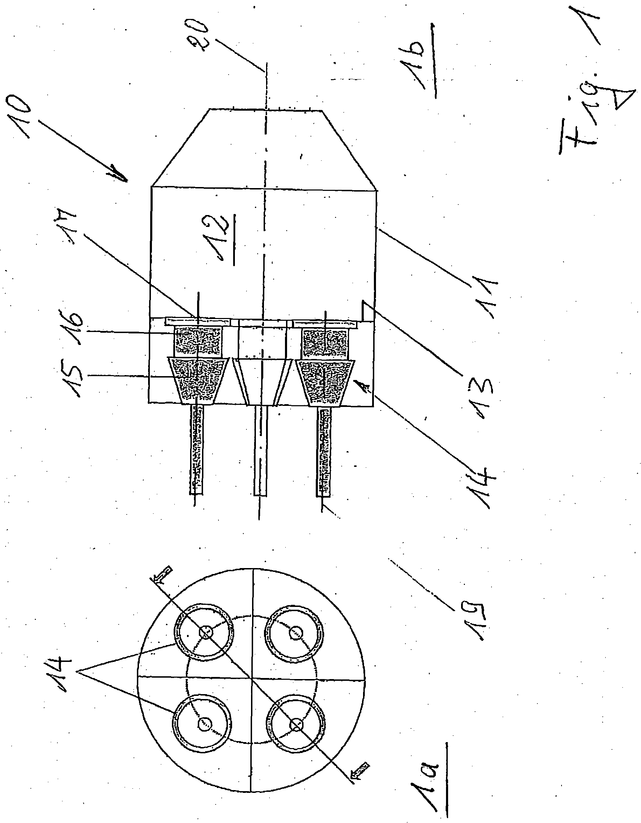

With reference to Fig. 1a and 1b a can-combustor for a gas turbine 10 with a first exemplary embodiment of the invention is schematically shown. It will be understood that this can-combustor 10 is typically combined with a number of additional similar or identical combustors arranged in an annular array in the gas turbine casing, each combustor supplying hot combustion gases to downstream turbine stages.

Each can-combustor 10 comprises a cylindrical casing 11 enclosing a combustion zone 12 for burning a mixture of fuel and combustion air. At an upstream end the combustion zone 12 is limited by a front panel 13. Four premixed burners 14, extending from the front panel 13 in an upstream direction, are attached to the front panel 13. At their burner exits 17 the burners are supported by the front panel 13. The burner supply the mixture of fuel and air into the combustion zone 12. All burners 14 are aligned parallel to each other and parallel to the central combustor axis 20. The burner exits 17 are flush with the front panel 13.

The premixed burners 14 are burners of the types as described in EP 321809 or EP 704657, for example. These types of burners are characterized by conical swirl generators, assembled from at least two hollow part-cone segments with a mutual offset, forming the axially extending air inlet slots between the individual segments for tangentially supplying combustion air into the swirl generator 15. The air inlet slots are equipped with nozzles for injecting gaseous and/or liquid fuels into the air flow. Exemplary embodiments of such burners comprise two, four or eight air inlet slots.

According to an embodiment of this invention one or more burners 14 are equipped with a lance, aligned parallel to the central axis 19, for injecting additional fuel and/or air into the fuel/air flow. Particularly this lance can be used for supplying pilot fuel and, as an option, additional premix fuel.

Said plurality of fuel nozzles of every individual burner 14 may include different groups of fuel nozzles, being controlled independently of each other. By this means the premixed burners 14 may dispose of three or even more fuel stages, e.g. of one pilot stage and two premix stages.

Downstream of the swirl generator 15 follows a mixing tube 16 for homogeneously mixing the fuel and the air. At an outlet end 17 of the premixed burners 14 a homogeneous mixture of fuel and combustion air is supplied into the combustion zone 12. The ignition of the fuel/air-mixture starts downstream of the burner outlet end 17. By a vortex breakdown and the formation of a backflow zone the flame is stabilized in the region downstream of the burner outlet end 17.

The length of the mixing tube 16 is selected so that an adequate mixing quality for all types of relevant fuels is obtained. According to the embodiment, shown in Fig. 1b, the four burners 14 posses identically configured swirl generators 15 and mixing tubes 16, i.e. all swirl generators 15 have the same number of air inlet slots and all mixing tubes 16 have the same length and the same diameter.

In the mixing tube 16 the axial-velocity profile has a maximum in the area of its central axis and thereby preventing flashback in this region. The axial velocity decreases toward the wall. In order to also prevent flashback in that area, various known measures may be taken, e.g. to rise the overall flow velocity by a respective dimensioning of the diameter and/or length of the mixing tube 16.

In particular, said premixed burners can be operated with liquid and/or gaseous fuels of all kinds. Thus, it is readily possible to provide different fuels or fuel qualities to the individual cans 10 of a gas turbine.

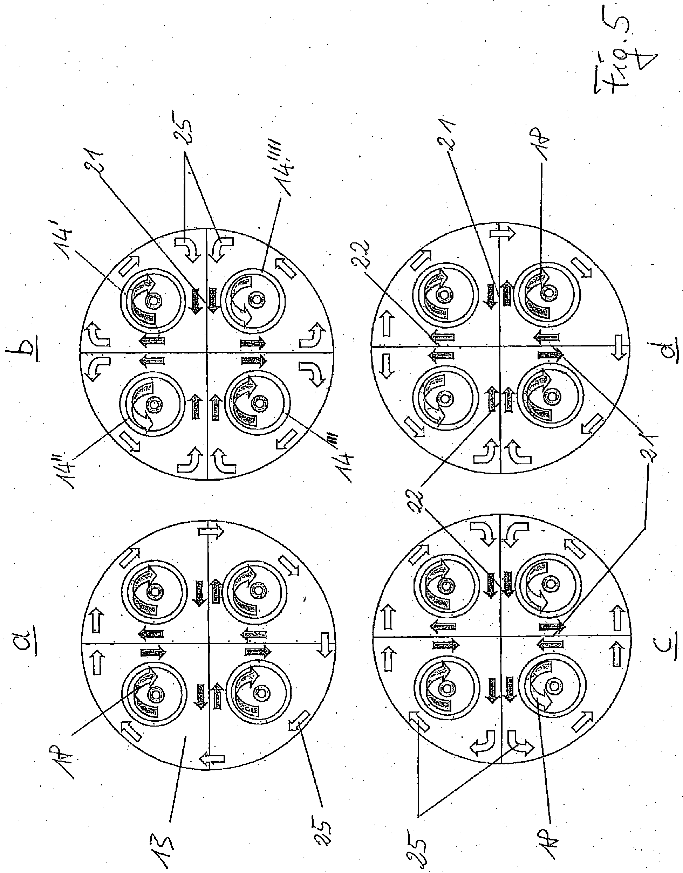

With reference to Fig. 1a and 5a a top view of a front panel 13 is schematically shown. Four premixed burners 14 are mounted on the front panel 13. It is remarkable that a central burner according to conventional can combustors does not exist. The four premixed burners 14 are symmetrically positioned on one perimeter in four identical 90° sectors of the front panel 13. All burners 14 have the same sense of swirl rotation, i.e. all burners generate either a clockwise swirl or an anti-clockwise swirl. In the embodiment, as shown in Fig. 5a, all burners 14 generate a clock-wise swirl flow 18. As a consequence, the directions of the swirl flows 18 of adjacent burners 14', 14", 14'", 14"" are in the opposite direction in a tangency boundary area 21 with increased turbulences and increased shear forces and with more heat and mass transfer in this area 21. Downstream a secondary radially outer swirl flow 25 is forming.

Figures 5b, 5c and 5d represent embodiments, which do not form part of the invention, with two groups of burners 14', 14", 14"', 14"", a first group configured to generate a swirl flow in a first direction, e.g. a clockwise sense of flow, and a second group of burners to generate a swirl flow in opposite direction, e.g. an anti-clockwise sense of flow.

According to the embodiment of Fig. 5b adjacent burners 14 generate swirl flows 18 of opposite senses of rotation, whereas diagonally opposing burners 14'-14"', 14"-14"" have the same sense of rotation. In a tangency boundary area 22 between adjacent burners 14 the flows circulate in the same direction, the relative velocities of the adjacent swirls in this area are close to zero with low shear forces and low turbulences in this area 22 with the effect of a significantly reduced heat and mass transfer in this region.

The figures 5c and 5d disclose additional configurations of burners with different swirl senses in a can combustor 10 with four burners 14', 14", 14"', 14"" according to the invention. Fig. 5c shows a configuration with diagonally opposing burners having different senses of swirl rotation and Fig. 5d shows a configuration with three burners 14', 14"', 14"" generating a clockwise swirl flow 18 and one burner 14" generating an anti-clockwise swirl flow 18.

The modifications of flow patterns creating co- and counter-flow at the aerodynamic interface between two adjacent burners 14', 14", 14'" or 14"" and resulting specific secondary flow patterns 25 effect different combustion behaviors of the respectively equipped cans 10 and may be used for optimum stability of the combustion and for low emissions.

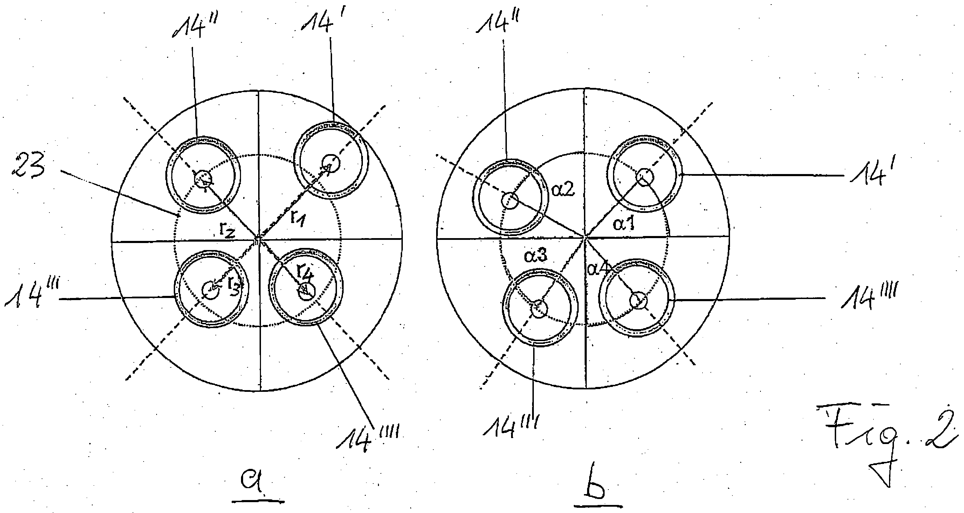

The can combustor according to the invention is disclosed in Fig. 2a. The four burners 14', 14", 14"', 14"" with one burner in each of the four 90° sectors are positioned on different radial distances from the centre of the can 10. The radial distance r₁ of at least one burner 14' differs from the radial distance r₂, r₃ or r₄ of at least one other burner 14", 14'" or 14"", wherein the radial distances r₁, r₂, r₃, r₄ are defined as the distances between the longitudinal axis 20 of the can 10 and the longitudinal axis 19 of the respective burner 14', 14", 14"', 14"". Concretely Fig. 2a shows an embodiment with four burners each of them positioned in the front panel 13 on a different distance from the central axis of the can combustor 10: r₁ ≠ r₂ ≠ r₃ ≠ r₄.

Fig. 2b discloses a further aspect of the invention. At least one burner 14' of the four burners 14 with one burner in each of the four equal 90° sectors is positioned at a different azimuthal angle α₁, α₂, α₃ or α₄ in its respective 90° sector in relation to the position of at least one other burner 14", 14"' or 14"".

The avoidance of symmetry in the can combustor 10 leads to less excitation of azimuthal instability modes within the can 10.

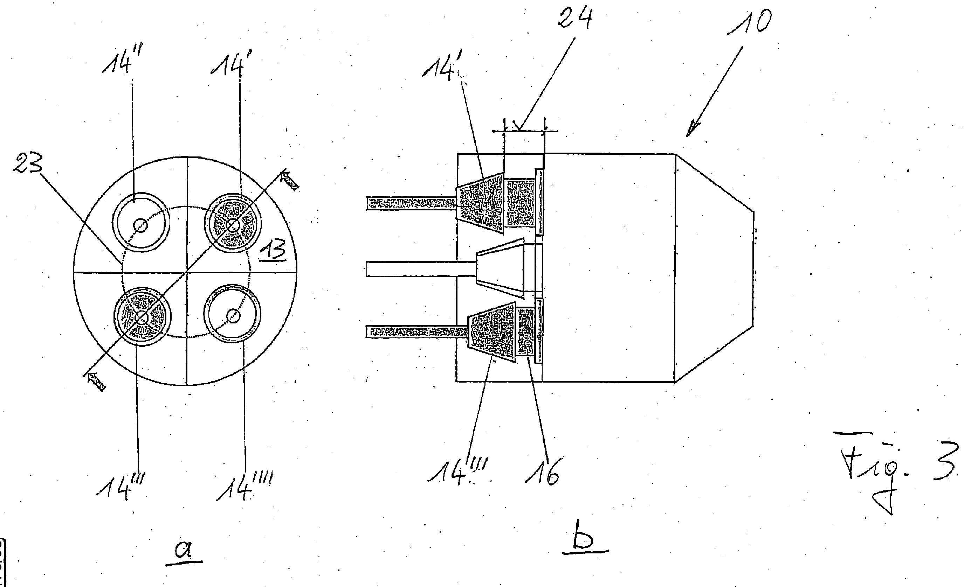

Figures 3a and 3b schematically show in another aspect a can combustor 10 with four burners 14, wherein at least one, up to all burners 14 are equipped with mixing tubes 16 of different length. From the side view of Fig. 3b can be seen that any burner 14', 14" and 14'" has a different mixing tube length 24 in relation to the mixing tube length of another burner 14. Different lengths 24 of the mixing tubes 16 of a premixed burner 14 effect different characteristic mixing times of the fuel/air mixture and consequently different durations of time between the moment, when the fuel is injected into the burner and that moment, when it reaches the flame front.
Different mixing times are an effective means to decouple the interaction between the fuel supply and pressure parameters in the combustion zone and thus to reduce thermo-acoustic oscillations in the can combustor.

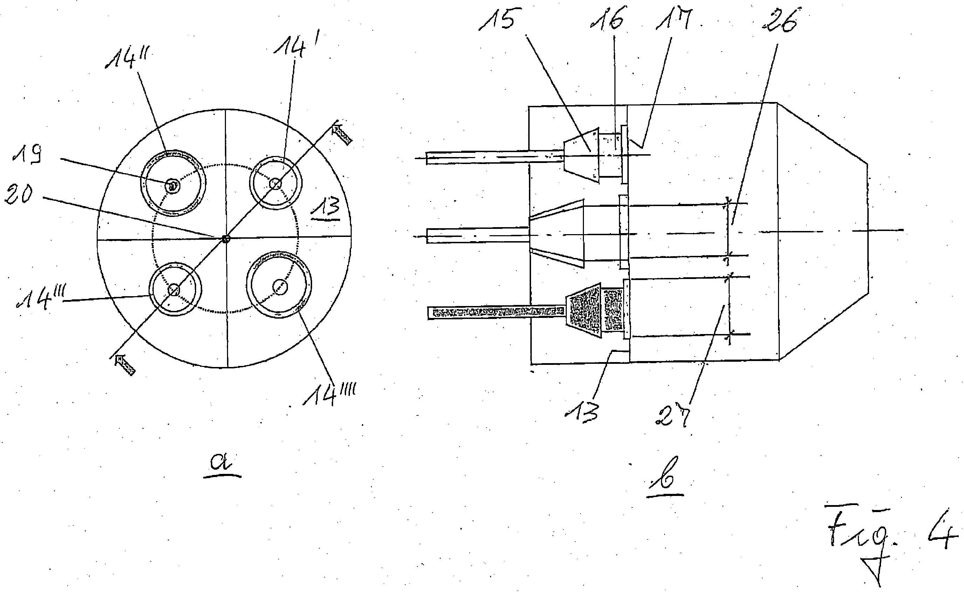

Another aspect of the inventive can combustor 10 is disclosed in Fig. 4a and 4b. According to this embodiment the burners 14 within the can 10 differ in their dimension by being up-scaled or down-scaled from a nominal size. In particular, the burners 14', 14", 14"', 14"" differ in a diameter and/or a length of the swirl generator 15 and/or the mixing tube 16. Fig. 4a and 4b schematically show a can combustor 10 with four burners 14', 14", 14"', 14"". All burners 14 are positioned at the same distance from the central axis 20 of the can 10; the central axis 19 of every individual burner 14', 14", 14"', 14"" is arranged on the same perimeter circle 23. Two groups of burners can be identified: burners 14' and 14"' and burners 14" and 14"". The two groups differ in the dimensions of the length and the diameter of the swirl generator 15 and the mixing tube 16 and in the burner exit 17 diameter 27, wherein diametrically opposite burners 14' and 14"' or 14" and 14"" are equally dimensioned.

According to another preferred embodiment at least one burner 14', 14", 14"' or 14"" is equipped with a smaller diameter than the other burners 14', 14", 14"', 14"" with the effect of less flow-through. This burner with the less flow-through can be operated with a higher pilot ratio with the effect of a reduction of the combustor dynamics and thus a stabilization of the combustion in the can 10.

According to an example, the individual burners 14', 14", 14"', 14"" generate swirls 18 of different intensity. Preferably this measure may be accompanied by any of the before-mentioned measures of different dimensioning of individual burner parts or of the creation of differing flow patterns of co- and counter-flow within the can combustor 10. Variations in the swirl intensity can be influenced by the dimension of the burner parts, but particularly differing intensities of the swirl flow (high swirl variants or low swirl variants) are realized by the dimension of the air inlet slots of the swirl generator 15 of an individual burner 14. The advantage is again in the higher inhomogeneity of the flow conditions in the combustor and hence in possible lower combustor dynamics.

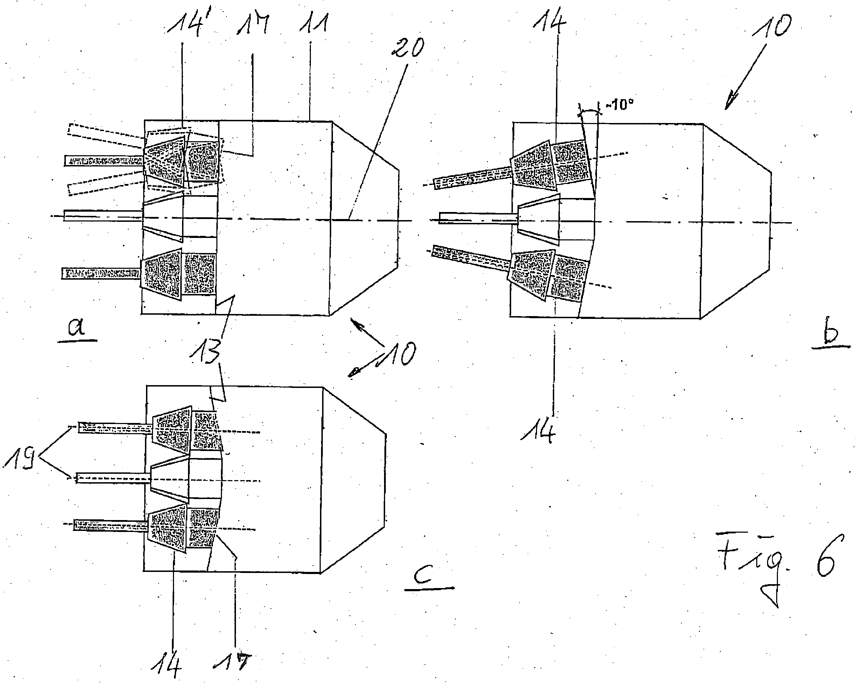

With reference to figures 6a, 6b and 6c three principle arrangements of the burners 14 in the front panel 13 of the can 10 are schematically shown.

The can 10 according to Fig. 6a comprises a cylindrical housing 11 with a planar front panel 13 at its upstream end. The planar front panel 13 is arranged essentially orthogonally to the central axis 20 of the can combustor 10. Four burners 14 are attached to this front panel 13. The longitudinal axes 19 of all burners 14 are parallel to each other and are parallel to the central axis 20 of the can 10. Fig. 6a discloses as an alternative to arrange at least one burner 14' in a different direction. The longitudinal axis 19 of said at least one burner 14' or of more burners 14", 14"' and/or 14"" may be inclined up to ±10° relating to the central axis 20 of the can combustor 10. In this case, as a preferred embodiment, the respective burner exit(s) 17 is/are cut off flush with the front panel 13. As a consequence, the inclined burners possess an oval burner exit 17.

In an alternative aspect, as disclosed in Fig. 6b, the planar front panel 13 is replaced by a conical front panel 13, whereby the inclination angle of the conical front panel corresponds to the inclination angle of the burner axes 19. As a consequence, the plane of the burner exit 17 is parallel to the front panel 13.

In a third alternative aspect according to Fig. 6c a can combustor 10 is equipped with a conically formed front panel 13 at its upstream end. Four burners 14 with parallel longitudinal axes 19 to each other and to the central axis 20 of the can 10 are attached to said front panel 13. Two options to attach the burners 14 to the front panel 13 are evident. The burners 14 can be fixed to front panel 13 in such a way that the burner exits 17 partly or completely protrude into the combustion zone 12 or alternatively the burner exits 17 are slanted to an ellipsoid outlet in such a way that they are flush against the conical front panel 13.

Alternatively to the above-disclosed conical shape the front panel 13 may be made of a segmented structure, based on a number four flat segments, preferably four segments, of an essentially triangular form.

## Claims

1. Can combustor for a can-annular combustor arrangement in a gas turbine, the can combustor (10) at least comprising an essentially cylindrical casing (11) with an axially upstream front panel (13) and an axially downstream outlet end, a number of premixed burners (14), extending in an upstream direction from said front panel (13) and having a burner exit (17), supported by this front panel (13), for supplying a fuel/air mixture into a combustion zone (12) inside the casing (11), wherein up to four premixed burners (14) are attached to the front panel (13) in a substantially annular array, each burner (14) having a mixing tube (16) to induce a swirl flow of said fuel/air mixture and wherein no central burner is provided, **characterized in that** each burner (14) is having a conical swirl generator (15) and **in that** the alignment of the central longitudinal axis (19) of at least one premixed burner (14'), attached to the front panel (13), differs from the alignment of the central longitudinal axis (19) of at least one other premixed burner (14", 14"', 14"") in an radial direction.

2. Can combustor according to claim 1, wherein the alignment of the central longitudinal axis (19) of at least one premixed burner (14'), attached to the front panel (13), differs from the alignment of the central longitudinal axis (19) of at least one other premixed burner (14", 14"', 14"") in azimuthal direction.

3. Can combustor according to claim 2, wherein the central longitudinal axis (19) of said at least one burner (14') is inclined up to ±10° in relation to the combustor axis (20).

4. Can combustor according to claim 2, wherein the central longitudinal axis (19) of said at least one burner (14') is inclined up to ±20° in relation to its diagonally opposite burner (14"').

5. Can combustor according to claim 3, wherein all burners (14', 14", 14"', 14""), attached to the front panel (13), have the same inclination angle in relation to the central axis (20) of the can (10).

6. Can combustor according to claim 1, wherein the length (24) and/or the diameter (26) of the mixing tube (16) of at least one premixed burner (14') differs from the length (24) and/or the diameter (26) of the mixing tube (16) of at least one other premixed burner (14", 14"', 14"").

7. Can combustor according to claim 6, wherein all burners (14', 14", 14"', 14"") have different lengths (24) and/or different diameters (26) of their mixing tubes (16).

## Patentansprüche

1. Rohrbrennkammer für eine Ring-Rohrbrennkammeranordnung in einer Gasturbine, welche Rohrbrennkammer (10) zumindest ein im Wesentlichen zylindrisches Gehäuse (11) mit einer axial stromaufwärts liegenden Frontplatte (13) und einem axial stromabwärts liegenden Auslassende, eine Anzahl von Brennern (14) mit Vormischung aufweist, die von der Frontplatte (13) in einer Stromaufwärtsrichtung verlaufen und einen Brenneraustritt (17) haben, der von dieser Frontplatte (13) gehalten ist, um ein Brennstoff-/Luftgemisch in eine Verbrennungszone (12) innerhalb des Gehäuses (11) zuzuliefern, wobei bis zu vier Brenner (14) mit Vormischung an der Frontplatte (13) in einer im Wesentlichen ringförmigen Anordnung befestigt sind, wobei jeder Brenner (14) ein Mischrohr (16) aufweist, um einen Wirbelstrom des Brennstoff-/Luftgemisches zu induzieren, und wobei kein zentraler Brenner vorgesehen ist, **dadurch gekennzeichnet, dass** jeder Brenner (14) einen kegelförmigen Wirbelgenerator (15) aufweist, und dadurch, dass die Ausrichtung der Mittellängsachse (19) mindestens eines Brenners (14') mit Vormischung, der an der Frontplatte (13) befestigt ist, von der Ausrichtung der Mittellängsachse (19) mindestens eines anderen Brenners (14'', 14''', 14'''') mit Vormischung in einer radialen Richtung verschieden ist.

2. Rohrbrennkammer nach Anspruch 1, wobei die Ausrichtung der Mittellängsachse (19) mindestens eines Brenners (14') mit Vormischung, der an der Frontplatte (13) befestigt ist, von der Ausrichtung der Mittellängsachse (19) mindestens eines anderen Brenners (14'', 14''', 14'''') mit Vormischung in azimutaler Richtung verschieden ist.

3. Rohrbrennkammer nach Anspruch 2, wobei die Mittellängsachse (19) des mindestens einen Brenners (14') bis zu ±10° relativ zu der Brennkammerachse (20) geneigt ist.

4. Rohrbrennkammer nach Anspruch 2, wobei die Mittellängsachse (19) des mindestens einen Brenners (14') bis zu ±20° relativ zu dem ihm diagonal gegenüberliegenden Brenner (14''') geneigt ist.

5. Rohrbrennkammer nach Anspruch 3, wobei alle Brenner (14', 14'', 14''', 14''''), die an der Frontplatte (13) angebracht sind, denselben Neigungswinkel relativ zu der Mittelachse (20) der Rohrkammer (10) haben.

6. Rohrbrennkammer nach Anspruch 1, wobei die Länge (24) und/oder der Durchmesser (26) des Mischrohres (16) mindestens eines Brenners (14') mit Vormischung von der Länge (24) und/oder dem Durchmesser (26) des Mischrohres (16) mindestens eines anderen Brenners (14'', 14''', 14'''') mit Vormischung verschieden ist bzw. sind.

7. Rohrbrennkammer nach Anspruch 6, wobei alle Brenner (14', 14'', 14''', 14'''') unterschiedliche Längen (24) und/oder unterschiedliche Durchmesser (26) ihrer Mischrohre (16) haben.

## Revendications

1. Chambre de combustion à tubes pour un agencement de chambre de combustion annulaire à tubes dans une turbine à gaz, la chambre de combustion à tubes (10) comprenant au moins un boîtier essentiellement cylindrique (11) avec un panneau avant axialement en amont (13) et une extrémité de sortie axialement en aval, un nombre de brûleurs à pré-mélange (14) s'étendant dans une direction en amont à partir dudit panneau avant (13) et ayant une sortie de brûleur (17) supportée par ce panneau avant (13), pour amener un mélange de combustible/air dans une zone de combustion (12) à l'intérieur du boîtier (11), dans laquelle jusqu'à quatre brûleurs à pré-mélange (14) sont fixés sur le panneau avant (13) dans un réseau sensiblement annulaire, chaque brûleur (14) ayant un tube de mélange (16) afin d'induire un écoulement tourbillonnant dudit mélange de combustible/air et dans laquelle aucun brûleur central n'est pas prévu, **caractérisée en ce que** chaque brûleur (14) a un générateur de tourbillon conique (15) et **en ce que** l'alignement de l'axe longitudinal central (19) du au moins un brûleur à pré-mélange (14'), fixé sur le panneau avant (13), diffère de l'alignement de l'axe longitudinal central (19) d'au moins un autre brûleur à pré-mélange (14", 14"', 14"") dans une direction radiale.

2. Chambre de combustion à tubes selon la revendication 1, dans laquelle l'alignement de l'axe longitudinal central (19) d'au moins un brûleur à pré-mélange (14'), fixé au panneau avant (13), diffère de l'alignement de l'axe longitudinal central (19) d'au moins un autre brûleur à pré-mélange (14", 14"', 14"") dans la direction azimutale.

3. Chambre de combustion à tubes selon la revendication 2, dans laquelle l'axe longitudinal central (19) dudit au moins un brûleur (14') est incliné jusqu'à ±10° par rapport à l'axe de la chambre de combustion (20).

4. Chambre de combustion à tubes selon la revendication 2, dans laquelle l'axe longitudinal central (19) dudit au moins un brûleur (14') est incliné jusqu'à ±20° par rapport à son brûleur (14"') diagonalement opposé.

5. Chambre de combustion à tubes selon la revendication 3, dans laquelle tous les brûleurs (14', 14", 14"', 14"") fixés au panneau avant (13), ont le même angle d'inclinaison par rapport à l'axe central (20) du tube (10).

6. Chambre de combustion à tubes selon la revendication 1, dans laquelle la longueur (24) et/ou le diamètre (26) du tube de mélange (16) d'au moins un brûleur à pré-mélange (14') diffère de la longueur (24) et/ou du diamètre (26) du tube de mélange (16) d'au moins un autre brûleur à pré-mélange (14", 14"', 14"").

7. Chambre de combustion à tubes selon la revendication 6, dans laquelle tous les brûleurs (14', 14", 14"', 14"") ont des longueurs différentes (24) et/ou des diamètres différents (26) de leurs tubes de mélange (16).
